# EUROPÄISCHE PATENTSCHRIFT

(11) **EP 4 077 972 B1**
(45) Veröffentlichungstag und Bekanntmachung des Hinweises auf die Patenterteilung: **03.04.2024**
(21) Anmeldenummer: 20845567.5
(22) Anmeldetag: 18.12.2020
(51) Int. Cl.: F16G 13/16

(54) **ENERGIEFÜHRUNGSKETTE UND SPEICHEREINHEIT FÜR EINE ENERGIEFÜHRUNGSKETTE**
ENERGY CHAIN AND STORAGE UNIT FOR AN ENERGY CHAIN
CHAÎNE PORTE-CÂBLES ET UNITÉ D'ACCUMULATION POUR UNE CHAÎNE PORTE-CÂBLES

(30) Priorität: 19.12.2019 DE 202019107117 U
(43) Veröffentlichungstag der Anmeldung: 26.10.2022
(73) Patentinhaber: Igus GmbH, 51147 Köln (DE)
(72) Erfinder: BARTEN, Dominik, 53340 Meckenheim (DE); HERMEY, Andreas, 53773 Hennef (DE)
(74) Vertreter: Lippert Stachow Patentanwälte Rechtsanwälte
(86) Internationale Anmeldenummer: PCT/EP2020/087132
(87) Internationale Veröffentlichungsnummer: WO 2021/123242

(56) Entgegenhaltungen:
- EP-A1- 1 201 963
- EP-B1- 1 201 963
- WO-A1-2013/182889
- CN-A- 110 537 036
- DE-U1-202005 005 826
- DE-U1-202010 005 842
- JP-U- S54 162 895
- US-B1- 6 425 238

## Beschreibung

Die Erfindung betrifft eine Energieführungskette mit einem mehrere Kettenglieder aufweisenden ersten Kettenabschnitt und einem mehrere Kettenglieder aufweisenden zweiten Kettenabschnitt, wobei die Kettenglieder der beiden Kettenabschnitte verschwenkbar miteinander verbunden sind und jeweils zwei in einer Querrichtung zur Längsrichtung der Energieführungskette gegenüberliegende Seitenteile umfassen, die senkrecht zur Querrichtung und zur Längsrichtung weisende obere und untere Schmalflächen aufweisen, wobei zumindest einige der Kettenglieder ihre Seitenteile verbindende Traversen aufweisen und zumindest einige der Kettenglieder des ersten Kettenabschnitts von ihren Seitenteilen in Querrichtung nach außen vorstehende Führungselemente aufweisen zur Führung der Kettenglieder an oder auf außenseitig von ihren Seitenteilen anordenbaren Führungsbahnen, und zumindest einige der Kettenglieder des zweiten Kettenabschnitts Rollenelemente oder Gleitelemente aufweisen, die über die oberen oder die unteren Schmalflächen ihrer Seitenteile vorstehen und auf einem diesen Schmalflächen gegenüberliegenden, die Energieführungskette kontaktierenden Bereich abrollen bzw. gleiten können.

Aus der WO 2013/182889 A1 ist eine Energieführungskette bekannt, die in Form einer Schleife mit einem Untertrum, das mit einem stationären Anschluss verbunden ist, einem über dem Untertrum verlaufenden Obertrum, das mit einem beweglichen Anschluss verbunden ist, und mit einem die beiden Trume miteinander verbindenden Umlenkbereich anordenbar ist. Die Kettenglieder sind mit Gleitschuhen versehen, die von ihren Seitenteilen quer zur Längsrichtung der Kette nach außen vorstehen und Standflächen aufweisen. Einige Gleitschuhe weisen jeweils eine Aussparung auf, die zum Eingriff einer außenseitig der Kette anordenbare Führungsrolle ausgebildet ist, wobei die Führungsrollen in die Ausnehmungen der betreffenden Gleitschuhe des Untertrums eingreifen und als Führungsbahnen zur Führung des Obertrums auf Standflächen der Gleitschuhe dienen. Die an den mit den Aussparungen versehenen Kettengliedern anschließenden Kettenglieder weisen ihrerseits einen mit einer Rolle versehenen Gleitschuh bzw. einen mit einem Vorsprung versehenen Gleitschuh auf, die in überlappenden Kettenbereichen des Ober-und Untertrums mit gegenüberliegenden Rollen und Vorsprüngen der betreffenden Gleitschuhe zusammenwirken.

Die aus diesem Dokument bekannte Energieführungskette eignet sich, wie vorstehend beschrieben, zur Anordnung in Form einer Schleife mit einem mit einem stationären Anschlusspunkt verbundenen Untertrum und einem darüber verlaufenden und auf den Führungsrollen geführten Obertrum. Für Fälle, in denen beim Verfahren der Energieführungskette die Trume einer oder mehrerer Schleifen führend bewegt werden sollen, ist die bekannte Kette jedoch ungeeignet, insbesondere wenn die Kette in Form von mehreren aneinander anschließenden Schleifen in einer Ablageeinheit, z.B. einer Speichereinheit, geführt ablegbar sein soll.

Der vorliegenden Erfindung liegt die Aufgabe zugrunde, eine Energieführungskette der eingangs genannten Art bereitzustellen, die eine oder mehrere aneinander anschließende Schleifen umfasst, deren durch einen Umlenkbereich verbundene Trume längs außenseitiger Führungsbahnen und längs sich kontaktierender Bereiche oder außenseitiger Kontaktflächen mit möglichst geringen Reibungskräften geführt werden können.

Die Aufgabe wird erfindungsgemäß durch die Merkmalskombination des Anspruchs 1 gelöst, indem die Gesamtbreite der Kettenglieder des zweiten Kettenabschnitts in Querrichtung kleiner oder gleich der Gesamtbreite der Kettenglieder des ersten Kettenabschnitts abzüglich der Breite in Querrichtung der sich außenseitig erstreckenden Führungselemente ist.

Für den Fall, dass beim Verfahren der Energieführungskette der zweite Kettenabschnitt in einen Bereich gelangt, in dem zur außenseitigen Führung des ersten Kettenabschnitts Führungsbahnen angeordnet sind, wird der zweite Kettenabschnitt in diesem Bereich nicht durch die Führungsbahnen behindert. Der zweite Kettenabschnitt kann aufgrund seiner entsprechend geringeren Breite an den Führungsbahnen vorbei bewegt werden. Die beiden Kettenabschnitte können aneinander gelenkig anschließen.

Die erfindungsgemäße Energieführungskette kann ausschließlich aus dem ersten und dem zweiten Kettenabschnitt bestehen.

Andererseits kann die erfindungsgemäße Energieführungskette mehrere sich einander abwechselnde erste und zweite Kettenabschnitte aufweisen.

Die Rollenelemente oder Gleitelemente des zweiten Kettenabschnitts können in Längsrichtung fluchtend mit den Schmalflächen der Seitenteile der Kettenglieder des ersten Kettenabschnitts angeordnet sein, so dass die Rollen- oder Gleitelemente eines Bereichs des zweiten Kettenabschnitts auf den Schmalflächen der Seitenteile eines Bereichs des ersten Kettenabschnitts abrollen bzw. gleiten können.

Gemäß einer bevorzugten Ausführung ist zwischen den beiden Kettenabschnitten ein Kettenglied angeordnet, dessen Seitenteile einen nach außen gekröpften Bereich und einen nach innen gekröpften Bereich aufweisen, wobei der nach außen gekröpften Bereich mit dem in Längsrichtung benachbarten Seitenteil des ersten Kettenabschnitts und der nach innen gekröpfte Bereich mit dem in Längsrichtung benachbarten Seitenteil des zweiten Kettenabschnitts gelenkig verbunden sind.

Weiterhin ist gemäß einer bevorzugten Ausführung vorgesehen, dass die in Längsrichtung benachbarten Seitenteile der Kettenglieder des ersten Kettenabschnitts und/oder des zweiten Kettenabschnitts abwechselnd aus Innen- und Außenlaschen gebildet sind. Die Innen- und Außenlaschen weisen Überlappungsbereiche auf, wobei die Überlappungsbereiche der Außenlaschen außenseitig zu den Überlappungsbereichen der Innenlaschen angeordnet sind.

In einer bevorzugten Ausführung sind die Führungselemente der Kettenglieder des ersten Kettenabschnitts als Führungsrollen ausgebildet.

Insbesondere können jeweils zwei Führungsrollen außenseitig an den Außenlaschen der Kettenglieder des ersten Kettenabschnitts angeordnet sein.

Entsprechend können jeweils zwei Rollenelemente außenseitig an den Außenlaschen der Kettenglieder des zweiten Kettenabschnitts angeordnet sein.

Benachbarte Kettenglieder der Energieführungskette können in einer Verschwenkrichtung durch Anschläge relativ zueinander begrenzt abwinkelbar sein, wodurch ein Minimalradius für die Umlenkbögen der Umlenkbereiche der Energieführungskette definiert wird. Weiterhin können sie in der anderen Verschwenkrichtung bis in ihre zueinander gestreckte Ausrichtung begrenzt abwinkelbar sein. Da benachbarte Kettenglieder in diesem Falle nicht über ihre zueinander gestreckte Ausrichtung verschwenkbar sind, wird insbesondere bei im Wesentlichen freitragenden Trumen eine relativ stabile gerade Erstreckung derselben ermöglicht.

Die Erfindung betrifft weiterhin eine Speichereinheit für eine Energieführungskette. Die Speichereinheit umfasst ein Speichergehäuse und eine darin angeordnete Energieführungskette gemäß der vorliegenden Erfindung mit den vorstehend beschriebenen Merkmalen.

Die Energieführungskette weist einen ersten Kettenabschnitt der vorstehend beschriebenen Art und einen daran anschließenden zweiten Kettenabschnitt der vorstehend beschriebenen Art auf und ist im Speichergehäuse spiralförmig mit zwei in ihrem Abstand veränderlichen Wickelachsen gewickelt. Sie weist an ihrem einen Ende einen im Inneren der spiralförmigen Wicklung stationär im Speichergehäuse angeordneten festen Anschlusspunkt und an ihrem anderen Ende einen beweglichen Anschlusspunkt auf, wobei durch Verfahren des beweglichen Anschlusspunktes und dadurch bewirktes Verfahren der Energieführungskette der Abstand der Wickelachsen voneinander zwischen einem Minimalabstand und einem Maximalabstand veränderbar ist. Der erste Kettenabschnitt ist mit dem beweglichen Anschlusspunkt und der zweite Kettenabschnitt ist mit dem festen Anschlusspunkt verbunden.

Der feste Anschlusspunkt ist bevorzugt im mittleren Bereich des Speichergehäuses bezogen auf dessen Längserstreckung in Längsrichtung der Trume angeordnet.

Eine Speichereinheit der vorstehend genannten Art eignet sich insbesondere zur Speicherung einer Energieführungskette in einem sich relativ lang erstreckenden verfügbaren Speicherraum, so dass der Maximalabstand der beiden Wickelachsen relativ groß im Verhältnis zu ihrem Minimalabstand gewählt werden kann.

Das Speichergehäuse weist zwei parallele Seitenplatten auf, die parallel zu den Umlenkbögen der Umlenkbereiche der Energieführungskette angeordnet sind und die sich in Längsrichtung der Trume über die Umlenkbereiche der Energieführungskette an beiden Wickelachsen erstrecken. Der bewegliche Anschlusspunkt ist außerhalb des Speichergehäuses angeordnet.

Zwischen den Seitenplatten kann in deren oberen oder unteren Bereichen eine Durchführöffnung für das mit dem beweglichen Anschlusspunkt verbundene Trum des ersten Kettenbschnitts der Energieführungskette vorgesehen sein.

Die Seitenplatten des Speichergehäuses weisen an ihren Innenseiten gegenüberliegende Führungsbahnen auf, die mit den an den Kettengliedern des ersten Kettenabschnitts nach außen vorstehenden Führungselementen zusammenwirken. Die Führungsbahnen erstrecken sich in einer oder mehreren Wicklungen spiralförmig an den Innenseiten der Seitenplatten um zwei Wickelachsen, die den in ihrem Maximalabstand angeordneten Wickelachsen der Energieführungskette entsprechen. Die Länge der um ihre stationären Wickelachsen gewickelten Führungsbahnen ist der Länge des ersten Kettenabschnitts der Energieführungskette angepasst. Der erste Kettenabschnitt der Energieführungskette kann sich in seinem in das Speichergehäuse eingefahrenen Zustand über die gesamte Länge der Führungsbahnen erstrecken. Der sich daran anschließende zweite Kettenabschnitt der Energieführungskette erstreckt sich dann mit mindestens einem Umlenkbereich um mindestens eine der in ihrem Maximalabstand angeordneten Wickelachsen zum festen Anschlusspunkt hin und liegt mit seiner in Bezug auf den Umlenkbereich radial nach außen weisenden Seite über die Rollenelemente oder Gleitelemente an dem ersten Kettenabschnitt an.

Wird die Energieführungskette mit ihrem ersten Kettenabschnitt durch die Durchführöffnung aus dem Speichergehäuse herausgezogen, spult sich der spiralförmig im Speichergehäuse längs der Führungsbahnen gelagerte Bereich des ersten Kettenabschnitts ab. Dabei werden die an den ersten Kettenabschnitt anschließenden Kettenglieder des zweiten Kettenabschnitts ohne Behinderung durch die Führungsbahnen spiralförmig aufgewickelt, wobei sich der Abstand zwischen ihren Wickelachsen bis zu ihrem Minimalabstand im Bereich des festen Anschlusspunktes verringert.

Um den Innenradius der spiralförmigen Wicklung des zweiten Kettenabschnitts um die in ihrem Minimalabstand angeordneten Wickelachsen zu begrenzen, kann ein die innere Wicklung abstützendes Element vorgesehen sein.

Die an den Seitenplatten des Speichergehäuses innen angeordneten Führungsbahnen können als Führungsschienen ausgebildet sein, auf denen die an den Kettengliedern des ersten Kettenabschnitts nach außen vorstehenden Führungselemente gleiten oder abrollen.

Die Rollenelemente oder Gleitelemente der Kettenglieder des zweiten Kettenabschnitts stehen an der in Bezug auf die Umlenkbereiche radial außenliegenden Schmalflächen der Seitenteile der Kettenglieder vor und rollen bzw. gleiten somit auf den radial nach innen weisenden Seiten der sie kontaktierenden Kettenglieder.

Aufgrund der erfindungsgemäßen Führung der Kettenglieder an den Führungsbahnen der Seitenwände des Speichergehäuses mit Hilfe der seitlich vorstehenden Führungselemente und an aneinanderliegenden Bereiche der Energieführungskette werden Reibungseffekte beim Verfahren der Energieführungskette innerhalb des Speichergehäuses auf ein Minimum reduziert. Daher kann die Energieführungskette mit einer relativ geringen Zugkraft auf das mit dem beweglichen Anschlusspunkt verbundene Trum aus dem Speichergehäuse herausgezogen und mit einer relativ geringen Druckkraft auf das mit dem beweglichen Anschlusspunkt verbundene Trum in dessen Längsrichtung in das Speichergehäuse eingeführt werden. Die Zug- und Drucckraft kann gegebenenfalls manuell auf das mit dem beweglichen Anschlusspunkt verbundene und sich aus dem Speichergehäuse heraus erstreckende Trum ausgeübt werden.

Angrenzend an den Bereich des festen Anschlusspunktes kann zumindest in einer Seitenplatte des Speichergehäuses eine Öffnung zum Durchführen der beim festen Anschlusspunkt aus der Energieführungskette heraustretenden Leitungen vorgesehen sein.

Das Speichergehäuse kann an den stirnseitigen Enden der Seitenplatten Stirnplatten und diese miteinander verbindende obere und untere Abschlussplatten aufweisen.

Die obere und untere Abschlussplatte können derart angeordnet sein, dass sie das obere bzw. untere Trum der im Speichergehäuse angeordneten Energieführungskette gleitend führen.

Das Speichergehäuse kann aus zwei Gehäuseschalen gebildet sein, deren Trennfläche in einer Ebene liegt, die sich parallel zu den Umlenkbögen der Umlenkbereiche der Energieführungskette erstreckt.

Eine der Stirnplatten kann im oberen oder unteren Bereich die Durchführöffnung für das mit dem beweglichen Anschluss verbundene Trum der Energieführungskette aufweisen.

Ausführungsbeispiele der erfindungsgemäßen Energieführungskette und Speichereinheit werden im Folgenden anhand der Zeichnung näher beschrieben.

In der Zeichnung zeigen:
- Figur 1: eine seitliche Ansicht eines Abschnitts eines ersten Ausführungsbeispiels einer Energieführungskette,
- Figur 2: eine Draufsicht auf den in Figur 1 dargestellten Abschnitt der Energieführungskette,
- Figur 3: eine stirnseitige Ansicht des in Figur 1 dargestellten Abschnitts der Energieführungskette in Richtung des Pfeils A,
- Figur 4: eine perspektivische Darstellung des in Figur 1 dargestellten Abschnitts der Energieführungskette,
- Figur 5: die perspektivische Ansicht gemäß Figur 4 mit auseinandergezogener Darstellung der an den Seitenteilen des ersten Abschnitts befestigten Führungselemente und der an den Seitenlaschen des zweiten Abschnitts drehbar angeordneten Rollenelementen,
- Figur 6: eine perspektivische, auseinandergezogene Darstellung einer Speichereinheit für die Energieführungskette,
- Figur 7: eine seitliche Ansicht der im Speichergehäuse angeordneten Energieführungskette in ihrem maximal eingefahrenen Zustand,
- Figur 8: eine seitliche Ansicht der im Speichergehäuse angeordneten Energieführungskette in ihrem maximal herausgezogenen Zustand,
- Figur 9: eine seitliche Ansicht eines Abschnitts eines zweiten Ausführungsbeispiels einer Energieführungskette,
- Figur 10: eine Draufsicht auf den in Figur 9 dargestellten Abschnitt der Energieführungskette,
- Figur 11: eine stirnseitige Ansicht des in Figur 9 dargestellten Abschnitts in Richtung des Pfeils A,
- Figur 12: eine perspektivische Ansicht des in Figur 9 darge-stellten Abschnitts,
- Figur 13: die perspektivische Ansicht gemäß Figur 12 mit auseinandergezogener Darstellung der an den Seitenteilen des ersten Abschnitts befestigten Führungs-elemente und der an den Seitenteilen des zweiten Abschnitts befestigten Gleitelemente,
- Figur 14: eine perspektivische, auseinandergezogene Darstellung einer Speichereinheit für die Energieführungskette,
- Figur 15: eine seitliche Ansicht der in dem Speichergehäuse angeordneten Energieführungskette in ihrem maximal eingefahrenen Zustand und
- Figur 16: eine seitliche Ansicht der im Speichergehäuse angeordneten Energieführungskette in ihrem maximal ausgefahrenen Zustand.

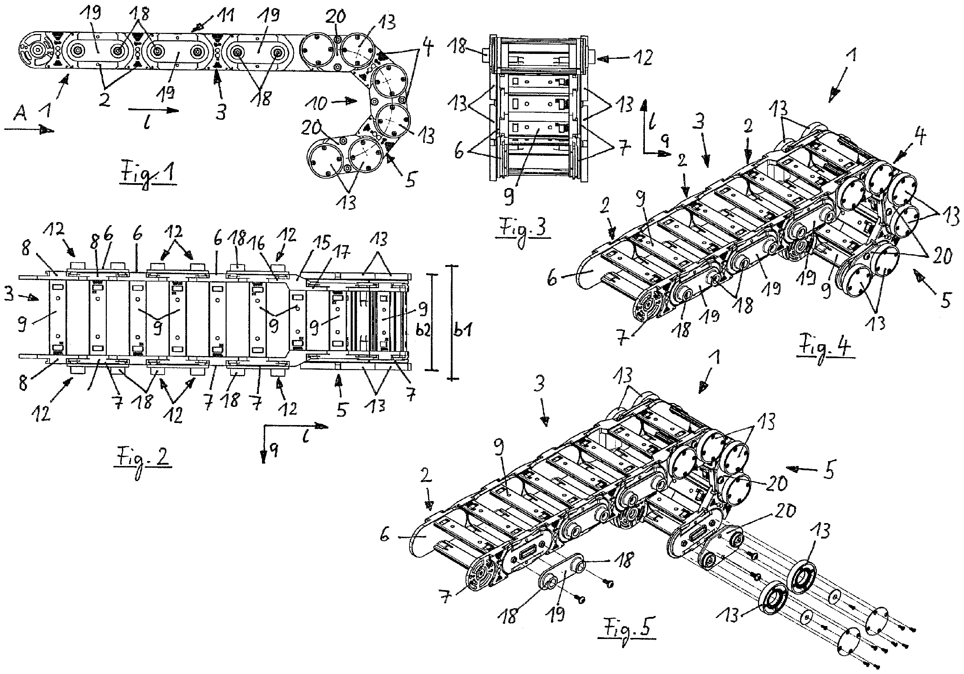

Wie aus den Figuren 1-5 und 9-13 hervorgeht, schließt die jeweils darin abschnittsweise gezeigte Energieführungskette 1 einen mehrere Kettenglieder 2 aufweisenden ersten Kettenabschnitt 3 und einen mehrere Kettenglieder 4 aufweisenden zweiten Kettenabschnitt 5 ein. Die Kettenglieder 2, 4 der beiden Kettenabschnitte 3, 5 sind verschwenkbar miteinander verbunden. Sie weisen jeweils zwei in einer Querrichtung q zur Längsrichtung l der Energieführungskette 1 gegenüberliegende Seitenteile 6, 7 auf, die mit senkrecht zur Querrichtung q und zur Längsrichtung l weisenden oberen und unteren Schmalflächen 8 versehen sind. Zumindest einige der Kettenglieder 2, 4 weisen ihre Seitenteile 6, 7 verbindende Traversen 9 auf.

Der in den genannten Figuren gezeigte Abschnitt der jeweiligen Energieführungskette ist mit einem Umlenkbereich 10 angeordnet, an den sich der Abschnitt eines Trums 11 anschließt.

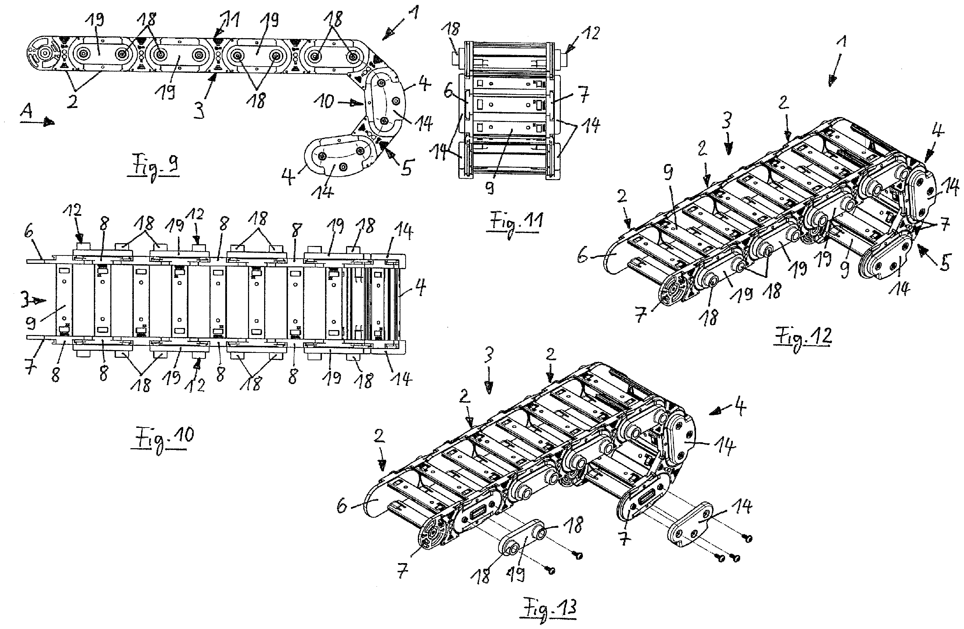

Die Kettenglieder 2 des ersten Kettenabschnitts 3 weisen von ihren Seitenteilen 6, 7 in Querrichtung q nach außen vorstehende Führungselemente 12 auf, die zur Führung der Kettenglieder 2 an oder auf außenseitig von ihren Seitenteilen 6, 7 anordenbaren Führungsbahnen (in den Figuren 1-5 und 9-13 nicht dargestellt) dienen. Die Kettenglieder 4 des zweiten Kettenabschnitts 5 weisen dagegen Rollenelemente (Figuren 1-5) oder Gleitelemente (Figuren 9-13) auf, die über die gemäß den Zeichnungsfiguren oberen Schmalflächen 8 ihrer Seitenteile 6, 7 vorstehen und die auf einem diesen Schmalflächen 8 gegenüberliegenden, die Energieführungskette 1 kontaktierenden (in den genannten Figuren nicht dargestellten) Bereich abrollen bzw. gleiten können.

Die Gesamtbreite b2 der Kettenglieder 4 des zweiten Kettenabschnitts 5 in Querrichtung, einschließlich der Rollenelemente 13 bzw. Gleitelemente 14, ist gleich der Gesamtbreite b1 der Kettenglieder 2 des ersten Kettenabschnitts 3 abzüglich der sich außenseitig erstreckenden Führungselemente 12, d. h., der Breite des mit den Führungsbahnen zusammenwirkenden Bereichs der Führungselemente 12.

Wie weiterhin insbesondere aus den Figuren 2 und 10 hervorgeht, sind die Rollenelemente 13 bzw. Gleitelemente 14 des zweiten Kettenabschnitts 5 in Längsrichtung fluchtend mit den Schmalflächen 8 der Seitenteile 6, 7 der Kettenglieder 2 des ersten Kettenabschnitts 3 angeordnet, so dass die Rollenelemente 13 bzw. Gleitelemente 14 eines Bereichs des zweiten Kettenabschnitts 5 auf den Schmalflächen 8 der Seitenteile 6, 7 eines Bereichs des ersten Kettenabschnitts 3 abrollen bzw. gleiten können. Dadurch wird der zweite Kettenabschnitt 5 in einem Bereich, in dem zur außenseitigen Führung des ersten Kettenabschnitts 3 Führungsbahnen angeordnet sind, durch die Führungsbahnen nicht behindert. Er kann aufgrund seiner entsprechend geringeren Gesamtbreite b2 an den Führungsbahnen vorbeibewegt werden.

Die in Längsrichtung benachbarten Seitenteile 6, 7 der beiden Kettenabschnitte 3 und 5 bestehen, wie insbesondere in den Figuren 2 und 10 gezeigt ist, abwechselnd aus Innen- und Außenlaschen. Die Innen- und Außenlaschen weisen Überlappungsbereiche auf, wobei die Überlappungsbereiche der Außenlaschen außenseitig zu den Überlappungsbereichen der Innenlaschen angeordnet sind.

Zwischen den beiden Kettenabschnitten 3 und 5 ist, wie insbesondere aus Figur 2 hervorgeht, ein zwischengeschaltetes Kettenglied 15 angeordnet, dessen Seitenteile 6, 7 einen nach außen gekröpften Bereich 16 und einen nach innen gekröpften Bereich 17 aufweisen. Der nach außen gekröpfte Bereich 16 ist mit dem in Längsrichtung benachbarten Seitenteil 6, 7 des ersten Kettenabschnitts 3 und der nach innen gekröpfte Bereich 17 mit dem in Längsrichtung benachbarten Seitenteil 6, 7 des zweiten Kettenabschnitts 5 gelenkig verbunden.

Bei den in der Zeichnung dargestellten Ausführungsbeispielen sind die Führungselemente 12 der Kettenglieder 2 des ersten Kettenabschnitts 3 als Führungsrollen 18 ausgebildet. Jeweils zwei Führungsrollen 18 sind über ein plattenförmiges Teil 19, an dem sie gelenkig gelagert sind, mit den Außenlaschen der Kettenglieder 2 verbunden.

Die plattenförmigen Teile 19 der beiden Ausführungsbeispiele unterscheiden sich lediglich in ihrer Dicke, die der Gesamtbreite b2 des zweiten Kettenabschnitts 5 jeweils angepasst ist.

Bei dem in den Figuren 1-5 dargestellten Ausführungsbeispiel sind jeweils zwei Rollenelemente 13 außenseitig über ein entsprechend gestaltetes plattenförmiges Teil 20, an dem sie drehbar gelagert sind, mit den Außenlaschen der Kettenglieder 4 des zweiten Kettenabschnitts 5 verbunden.

Alternativ sind gemäß dem zweiten in der Zeichnung dargestellten Ausführungsbeispiel Gleitelemente 14 außenseitig an den Außenlaschen der Kettenglieder 4 des zweiten Kettenabschnitts befestigt.

Benachbarte Kettenglieder 2, 4, 15 der Energieführungskette 1 sind in einer Verschwenkrichtung, die durch den in den Figuren 1 und 9 dargestellten Umlenkbereich 10 gekennzeichnet ist, durch Anschläge relativ zueinander begrenzt abwinkelbar. Durch die Anschläge wird ein Minimalradius für den Umlenkbogen des Umlenkbereichs 10 definiert. Die Kettenglieder 2, 4, 15 sind in der der Verschwenkrichtung gemäß den Figuren 1 und 9 entgegengesetzten Verschwenkrichtung bis in ihre zueinander gestreckte Ausrichtung des in den Figuren 1 und 9 gezeigten Trums 11 begrenzt abwinkelbar. Da die Kettenglieder 2, 4, 15 in diesem Falle nicht über ihre zueinander gestreckte Ausrichtung hinaus verschwenkbar sind, wird insbesondere bei einem im Wesentlichen freitragende Trum, wie in den Figuren 1 und 9 gezeigt, eine relativ stabile gerade Erstreckung desselben ermöglicht.

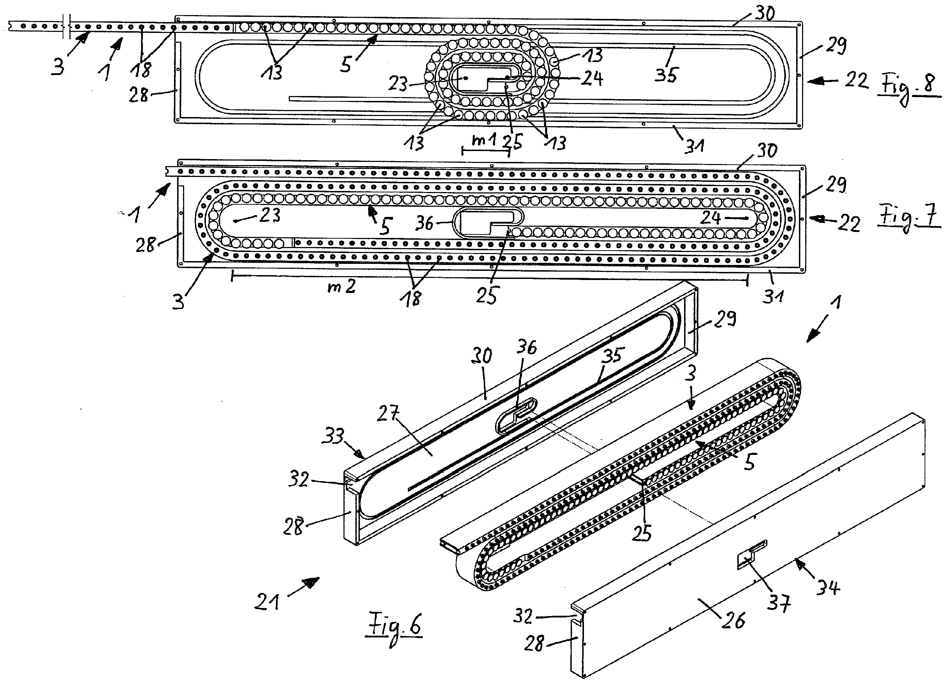

In den Figuren 6-8 bzw. 14-16 ist jeweils eine Speichereinheit 21 für die in den Figuren 1-5 und 9-13 abschnittsweise gezeigte Energieführungskette 1 dargestellt.

Wie aus den Figuren hervorgeht, ist die Energieführungskette 1 in einem Speichergehäuse 22 spiralförmig mit zwei in ihrem Abstand veränderlichen Wickelachsen 23, 24 gewickelt. Sie weist an ihrem einen Ende einen im Inneren der spiralförmigen Wicklung stationär im Speichergehäuse 22 angeordneten festen Anschlusspunkt 25 und an ihrem anderen Ende einen (in der Zeichnung nicht gezeigten) beweglichen Anschlusspunkt auf, so dass durch Verfahren des beweglichen Anschlusspunktes und dadurch bewirktes Verfahren der Energieführungskette 1 der Abstand der Wickelachsen 23, 24 voneinander zwischen einem Minimalabstand m1 und einem Maximalabstand m2 veränderbar ist. Der erste Kettenabschnitt 3 ist mit dem beweglichen Anschlusspunkt und der zweite Kettenabschnitt 5 mit dem festen Anschlusspunkt 25 verbunden. Der feste Anschlusspunkt 25 ist im mittleren Bereich des Speichergehäuses bezogen auf dessen Erstreckung in Längsrichtung l der Trume 11 angeordnet.

Das Speichergehäuse 22 weist zwei parallele Seitenplatten 26, 27 auf, die parallel zu den Umlenkbögen der Umlenkbereiche 10 der Energieführungskette 1 angeordnet sind und sich in Längsrichtung der Trume 11 über die Umlenkbereiche 10 der Energieführungskette 1 an beiden Wickelachsen 23, 24 erstrecken. An den stirnseitigen Enden der Seitenplatten 26, 27 weist das Speichergehäuse 22 Stirnplatten 28, 29 und diese miteinander verbindende obere und untere Abschlussplatten 30, 31 auf. Die in Richtung auf den außerhalb des Speichergehäuses 22 befindlichen beweglichen Anschlusspunkt gerichtete Stirnplatte 28 weist in ihrem oberen Bereich eine Durchführöffnung 32 für das mit dem beweglichen Anschlusspunkt verbundene Trum des ersten Kettenabschnitts 3 der Energieführungskette 1 auf. Das Speichergehäuse 22 ist aus zwei aneinander befestigbaren und den im Speichergehäuse 22 angeordneten Bereich der Energieführungskette 1 aufnehmenden Gehäuseschalen 33, 34 gebildet.

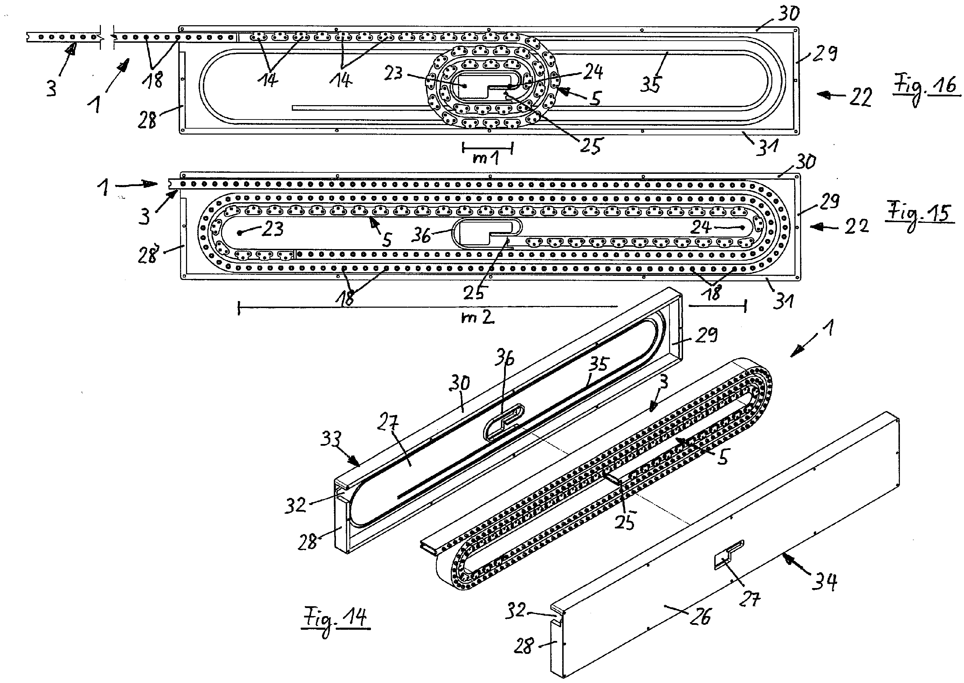

Die Seitenplatten 26, 27 des Speichergehäuses 22 weisen an ihren Innenseiten gegenüberliegende Führungsbahnen 35 auf, die mit den an den Kettengliedern 2 des ersten Kettenabschnitts 3 nach außen vorstehenden Führungselementen 12 zusammenwirken. Die Führungsbahnen 35 erstrecken sich in zwei Wicklungen spiralförmig an den Innenseiten der Seitenplatten 26, 27 um zwei Wickelachsen, die den in ihrem Maximalabstand m2 angeordneten Wickelachsen 23, 24 der Energieführungskette 1 entsprechen. Die Länge der um ihre beiden stationären Wickelachsen gewickelten Führungsbahnen ist der Länge des ersten Kettenabschnitts 3 der in die Speichereinheit 21 maximal eingefahrenen Energieführungskette 1 angepasst. Wie aus den Figuren 7 und 15 hervorgeht, erstreckt sich in der maximal eingefahrenen Position der sich an den ersten Kettenabschnitt 3 anschließende zweite Kettenabschnitt 5 in den beiden in der Zeichnung dargestellten Ausführungsbeispielen mit jeweils einem Umlenkbereich 10 um die in ihrem Maximalabstand m2 angeordneten Wickelachsen 23, 24 zum festen Anschlusspunkt 25 hin und liegt mit seiner in Bezug auf die Umlenkbereiche 10 radial nach außen weisenden Seite über die Rollenelemente 13 des ersten Ausführungsbeispiels bzw. den Gleitelementen 14 des zweiten Ausführungsbeispiels an dem ersten Kettenabschnitt 3 an.

Wird die Energieführungskette 1 mit ihrem ersten Kettenabschnitt 3 aus dem Speichergehäuse 22 herausgezogen, spult sich der spiralförmig im Speichergehäuse 22 längs der Führungsbahnen gelagerte Bereich des ersten Kettenabschnitts 3 ab. Dabei werden die an den ersten Kettenabschnitt 3 anschließenden Kettenglieder 4 des zweiten Kettenabschnitts 5 ohne Behinderung durch die Führungsbahnen 35 spiralförmig aufgewickelt, wobei sich der Abstand zwischen ihren Wickelachsen 23, 24 bis zu ihrem in den Figuren 8 bzw. 16 dargestellten Minimalabstand m1 im Bereich des festen Anschlusspunktes 25 verringert.

Zur Begrenzung des Innenradius der spiralförmigen Wicklung des zweiten Kettenabschnitts 5 um die in ihrem Minimalabstand m1 angeordneten Wickelachsen 23, 24 ist ein die innere Wicklung abstützendes Element 36 in Form eines sich um eine spiralförmige Wicklung erstreckenden Vorsprungs vorgesehen.

Die an den Seitenplatten 26, 27 des Speichergehäuses 22 innen angeordneten Führungsbahnen 35 sind als Führungsschienen ausgebildet, auf denen die an den Kettengliedern 2 des ersten Kettenabschnitts 3 nach außen vorstehenden Führungsrollen 18 der beiden Ausführungsbeispiele abrollen.

Die Rollenelemente 13 gemäß dem ersten Ausführungsbeispiel und die Gleitelemente 14 gemäß dem zweiten Ausführungsbeispiel der Kettenglieder 4 des zweiten Kettenabschnitts stehen an der in Bezug auf die Umlenkbereiche 10 radial außenliegenden Schmalflächen 8 der Seitenteile 6, 7 der Kettenglieder 4 vor und rollen bzw. gleiten somit auf den radial nach innen weisenden Seiten der sie kontaktierenden Kettenglieder des im Speichergehäuse 22 angeordneten Abschnitts der Energieführungskette 1.

Angrenzend an den Bereich des festen Anschlusspunktes 25 ist in den beiden Seitenplatten 26, 27 des Speichergehäuses 22 eine Öffnung 37 zum Durchführen der beim festen Anschlusspunkt 25 aus der Energieführungskette 1 heraustretenden (in der Zeichnung nicht gezeigten) Leitungen vorgesehen.

### Bezugszeichenliste

- 1: Energieführungsette
- 2: Kettenglied
- 3: erster Kettenabschnitt
- 4: Kettenglied
- 5: zweiter Kettenabschnitt
- 6: Seitenteil
- 7: Seitenteil
- 8: Schmalfläche
- 9: Traverse
- 10: Umlenkbereich
- 11: Trum
- 12: Führungselement
- 13: Rollenelement
- 14: Gleitelement
- 15: Kettenglied
- 16: nach außen gekröpfter Bereich
- 17: nach innen gekröpfter Bereich
- 18: Führungsrolle
- 19: plattenförmiges Teil
- 20: plattenförmiges Teil
- 21: Speichereinheit
- 22: Speichergehäuse
- 23: Wickelachse
- 24: Wickelachse
- 25: fester Anschlusspunkt
- 26: Seitenplatte
- 27: Seitenplatte
- 28: Stirnplatte
- 29: Stirnplatte
- 30: Abschlussplatte
- 31: Abschlussplatte
- 32: Durchführöffnung
- 33: Gehäuseschale
- 34: Gehäuseschale
- 35: Führungsbahn
- 36: abstützendes Element
- 37: Öffnung
- q: Querrichtung
- l: Längsrichtung
- b1: Gesamtbreite
- b2: Gesamtbreite
- m1: Minimalabstand
- m2: Maximalabstand

## Patentansprüche

1. Energieführungskette (1) mit einem mehrere Kettenglieder (2) aufweisenden ersten Kettenabschnitt (3) und einem mehrere Kettenglieder (4) aufweisenden zweiten Kettenabschnitt (5), wobei die Kettenglieder (2, 4) der beiden Kettenabschnitte (3, 5) verschwenkbar miteinander verbunden sind und jeweils zwei in einer Querrichtung (q) zur Längsrichtung (1) der Energieführungskette (1) gegenüberliegende Seitenteile (6, 7) umfassen, die senkrecht zur Querrichtung (q) und zur Längsrichtung (1) weisende obere und untere Schmalflächen (8) aufweisen, wobei zumindest einige der Kettenglieder (2, 4) ihre Seitenteile (6, 7) verbindende Traversen (9) aufweisen und zumindest einige der Kettenglieder (2) des ersten Kettenabschnitts (3) von ihren Seitenteilen (6, 7) in Querrichtung (q) nach außen vorstehende Führungselemente (12) aufweisen zur Führung der Kettenglieder (2) an oder auf außenseitig von ihren Seitenteilen (6, 7) anordenbaren Führungsbahnen (35), und zumindest einige der Kettenglieder (4) des zweiten Kettenabschnitts (5) Rollenelemente (13) oder Gleitelemente (14) aufweisen, die über die oberen oder die unteren Schmalflächen (8) ihrer Seitenteile (6, 7) vorstehen und auf einem diesen Schmalflächen (8) gegenüberliegenden, die Energieführungskette (1) kontaktierenden Bereich abrollen bzw. gleiten können, **dadurch gekennzeichnet, dass** die Gesamtbreite (b2) der Kettenglieder (4) des zweiten Kettenabschnitts (5) in Querrichtung (q) kleiner oder gleich der Gesamtbreite (b1) der Kettenglieder (2) des ersten Kettenabschnitts (3) abzüglich der Breite in Querrichtung (q) der sich außenseitig erstreckenden Führungselemente (12) ist.

2. Energieführungskette (1) nach Anspruch 1, **dadurch gekennzeichnet, dass** sich die beiden Kettenabschnitte aneinander gelenkig anschließen.

3. Energieführungskette (1) nach Anspruch 1 oder 2,
**dadurch gekennzeichnet, dass** die Rollenelemente (13) oder Gleitelemente (14) des zweiten Kettenabschnitts (5) in Längsrichtung fluchtend mit den Schmalflächen (8) der Seitenteile (6, 7) der Kettenglieder (2) des ersten Kettenabschnitts (3) angeordnet sind, so dass die Rollenelemente (13) oder Gleitelemente (14) eines Bereichs des zweiten Kettenabschnitts (5) auf den Schmalflächen (8) der Seitenteile (6, 7) eines Bereichs des ersten Kettenabschnitts (3) abrollen bzw. gleiten können.

4. Energieführungskette (1) nach einem der Ansprüche 1-3, **dadurch gekennzeichnet, dass** zwischen den beiden Kettenabschnitten (3, 5) ein Kettenglied (15) angeordnet ist, dessen Seitenteile (6, 7) einen nach außen gekröpften Bereich (16) und einen nach innen gekröpften Bereich (17) aufweisen, wobei der nach außen gekröpfte Bereich (16) mit dem in Längsrichtung (l) benachbarten Seitenteil (6, 7) des ersten Kettenabschnitts (3) und der nach innen gekröpfte Bereich (17) mit dem in Längsrichtung (l) benachbarten Seitenteil (6, 7) des zweiten Kettenabschnitts (5) gelenkig verbunden ist.

5. Energieführungskette (1) nach einem der Ansprüche 1-4, **dadurch gekennzeichnet, dass** die in Längsrichtung (l) benachbarten Seitenteile (6, 7) der Kettenglieder (2, 4) des ersten Kettenabschnitts (3) und/oder des zweiten Kettenabschnitts (5) abwechselnd aus Innen- und Außenlaschen gebildet sind.

6. Energieführungskette (1) nach einem der Ansprüche 1-5, **dadurch gekennzeichnet, dass** die Führungselemente (12) der Kettenglieder (2) des ersten Kettenabschnitts (3) als Führungsrollen (18) ausgebildet sind.

7. Energieführungskette (1) nach einem der Ansprüche 1-6, **dadurch gekennzeichnet, dass** jeweils zwei Rollenelemente (13) außenseitig an den Außenlaschen der Kettenglieder (4) des zweiten Kettenabschnitts (5) angeordnet sind.

8. Speichereinheit (21) für eine Energieführungskette (1), die ein Speichergehäuse (22) und eine darin zumindest abschnittsweise angeordnete Energieführungskette (1) nach einem der Ansprüche 1-7 umfasst, wobei die Energieführungskette (1) jeweils nur einen ersten Kettenabschnitt (3) und einen daran anschließenden zweiten Kettenabschnitt (5) aufweist, im Speichergehäuse (22) spiralförmig mit zwei in ihrem Abstand veränderlichen Wickelachsen (23, 24) gewickelt ist und an ihrem einen Ende einen im Inneren der spiralförmigen Wicklung stationär im Speichergehäuse (22) angeordneten festen Anschlusspunkt (25) und an ihrem anderen Ende einen beweglichen Anschlusspunkt aufweist, wobei durch Verfahren des beweglichen Anschlusspunktes und dadurch bewirktes Verfahren der Energieführungskette (1) der Abstand der Wickelachsen (23, 24) voneinander zwischen einem Minimalabstand (m1) und einem Maximalabstand (m2) veränderbar ist, wobei der erste Kettenabschnitt (3) mit dem beweglichen Anschlusspunkt und der zweite Kettenabschnitt (5) mit dem festen Anschlusspunkt (25) verbunden ist, wobei die Rollenelemente (13) oder Gleitelemente (14) der Kettenglieder (4) des zweiten Kettenabschnitts (5) an den in Bezug auf die Umlenkbereiche (10) radial außenliegenden Schmalflächen (8) der Seitenteile (6, 7) der Kettenglieder (4) vorstehen und auf den radial nach innen weisenden Seiten der sie kontaktierenden Kettenglieder abrollen bzw. gleiten können, wobei das Speichergehäuse (22) gegenüberliegende Führungsbahnen (35) aufweist, die mit den an den Kettengliedern (2) des ersten Kettenabschnitts (3) nach außen vorstehenden Führungselementen (12) zusammenwirken und sich in einer oder mehreren Wicklungen spiralförmig um zwei Wickelachsen erstrecken, die den in ihrem Maximalabstand (m2) angeordneten Wickelachsen (23, 24) der Energieführungskette (1) entsprechen.

9. Speichereinheit (21) nach Anspruch 8, **dadurch gekennzeichnet, dass** der erste Kettenabschnitt (3) der Energieführungskette (1) sich in seinem in das Speichergehäuse (22) maximal eingefahrenen Zustand über die gesamte Länge der Führungsbahnen (35) erstreckt.

10. Speichereinheit (21) nach Anspruch 8 oder 9, **dadurch gekennzeichnet, dass** das Speichergehäuse (22) zwei parallele Seitenplatten (26, 27) aufweist, die parallel zu den Umlenkbögen der Umlenkbereiche (10) der Energieführungskette (1) angeordnet sind und die sich in Längsrichtung (l) der Trume (11) über die Umlenkbereiche (10) der Energieführungskette (1) an beiden Wickelachsen (23, 24) erstrecken, wobei die gegenüberliegenden Führungsbahnen (35) des Speichergehäuses (22) an den Innenseiten der Seitenplatten (26, 27) angeordnet sind.

11. Speichereinheit (21) nach Anspruch 10, **dadurch gekennzeichnet, dass** angrenzend an den Bereich des festen Anschlusspunktes (25) zumindest in einer Seitenplatte (26, 27) des Speichergehäuses (22) eine Öffnung (37) zur Durchführung der beim festen Anschlusspunkt (25) aus der Energieführungskette (1) heraustretenden Leitungen vorgesehen ist.

12. Speichereinheit (21) nach Anspruch 10 oder 11,
**dadurch gekennzeichnet, dass** das Speichergehäuse (22) an den stirnseitigen Enden der Seitenplatten (26, 27) Stirnplatten (28) und diese miteinander verbindende obere und untere Abschlussplatten (30, 31) aufweist.

13. Speichereinheit (21) nach Anspruch 12, **dadurch gekennzeichnet, dass** die obere und untere Abschlussplatte (30, 31) des Speichergehäuses (22) derart angeordnet ist, dass sie das obere bzw. Untertrum (11) der im Speichergehäuse (22) angeordneten Energieführungskette (1) gleitend führt.

14. Speichereinheit (21) nach Anspruch 12 oder 13,
**dadurch gekennzeichnet, dass** eine der Stirnplatten (28, 29) im oberen oder unteren Bereich eine Durchführöffnung (32) für das mit dem beweglichen Anschlusspunkt verbundene Trum der Energieführungskette (1) aufweist.

15. Speichereinheit (21) nach einem der Ansprüche 8-14,
**dadurch gekennzeichnet, dass** das Speichergehäuse (22) aus zwei Gehäuseschalen (33, 34) gebildet ist, deren Trennfläche in einer Ebene liegt, die sich parallel zu den Umlenkbögen der Umlenkbereiche (10) der Energieführungskette (1) erstreckt.

## Claims

1. Energy chain (1) with a first chain portion (3) having several chain links (2) and a second chain portion (5) having several chain links (4), wherein the chain links (2, 4) of the two chain portions (3, 5) are pivotably connected to one another and comprise in each case two side parts (6, 7), which lie opposite one another in a transverse direction (q) relative to the longitudinal direction (l) of the energy chain (1) and which have upper and lower narrow surfaces (8) facing perpendicularly to the transverse direction (q) and to the longitudinal direction (l), wherein at least some of the chain links (2, 4) have cross members (9) connecting their side parts (6, 7) and at least some of the chain links (2) of the first chain portion (3) have guide elements (12), which project outwards from their side parts (6, 7) in the transverse direction (q), for guiding the chain links (2) against or on guide tracks (35) which can be arranged outside their side parts (6, 7), and at least some of the chain links (4) of the second chain portion (5) have roller elements (13) or sliding elements (14), which project over the upper or the lower narrow surfaces (8) of their side parts (6, 7) and can roll or slide on a region which lies opposite these narrow surfaces (8) and contacts the energy chain (1), **characterized in that** the overall width (b2) of the chain links (4) of the second chain portion (5) in the transverse direction (q) is smaller than or equal to the overall width (b1) of the chain links (2) of the first chain portion (3) minus the width in the transverse direction (q) of the guide elements (12) extending on the outside.

2. Energy chain (1) according to claim 1, **characterized in that** the two chain portions adjoin one another in an articulated manner.

3. Energy chain (1) according to claim 1 or 2, **characterized in that** the roller elements (13) or sliding elements (14) of the second chain portion (5) are arranged in the longitudinal direction flush with the narrow surfaces (8) of the side parts (6, 7) of the chain links (2) of the first chain portion (3), with the result that the roller elements (13) or sliding elements (14) of a region of the second chain portion (5) can roll or slide on the narrow surfaces (8) of the side parts (6, 7) of a region of the first chain portion (3).

4. Energy chain (1) according to one of claims 1-3, **characterized in that** a chain link (15), the side parts (6, 7) of which have an outwardly offset region (16) and an inwardly offset region (17), is arranged between the two chain portions (3, 5), wherein the outwardly offset region (16) is connected in an articulated manner to the adjacent, in the longitudinal direction (l), side part (6, 7) of the first chain portion (3) and the inwardly offset region (17) is connected in an articulated manner to the adjacent, in the longitudinal direction (l), side part (6, 7) of the second chain portion (5).

5. Energy chain (1) according to one of claims 1-4, **characterized in that** the adjacent, in the longitudinal direction (l), side parts (6, 7) of the chain links (2, 4) of the first chain portion (3) and/or of the second chain portion (5) are formed alternately of inner and outer plates.

6. Energy chain (1) according to one of claims 1-5, **characterized in that** the guide elements (12) of the chain links (2) of the first chain portion (3) are formed as guide rollers (18).

7. Energy chain (1) according to one of claims 1-6, **characterized in that** two roller elements (13) in each case are arranged on the outside of the outer plates of the chain links (4) of the second chain portion (5).

8. Storage unit (21) for an energy chain (1), which comprises a storage housing (22) and, arranged therein at least in portions, an energy chain (1) according to one of claims 1-7, wherein the energy chain (1) has in each case only one first chain portion (3) and, adjoining it, a second chain portion (5), is helically wound in the storage housing (22) with two winding axes (23, 24) which are variable in terms of their spacing and has a fixed connection point (25) arranged stationarily in the storage housing (22) in the interior of the helical winding at one of its ends and a movable connection point at its other end, wherein, by movement of the movable connection point and movement caused thereby of the energy chain (1), the spacing of the winding axes (23, 24) from one another is variable between a minimum spacing (m1) and a maximum spacing (m2), wherein the first chain portion (3) is connected to the movable connection point and the second chain portion (5) is connected to the fixed connection point (25), wherein the roller elements (13) or sliding elements (14) of the chain links (4) of the second chain portion (5) project on the narrow surfaces (8), lying radially outwards in relation to the deflection regions (10), of the side parts (6, 7) of the chain links (4) and can roll or slide on the radially inwardly facing sides of the chain links contacting them, wherein the storage housing (22) has guide tracks (35), which lie opposite one another and interact with the guide elements (12), projecting outwards on the chain links (2), of the first chain portion (3) and extend helically in one or more windings about two winding axes, which correspond to the winding axes (23, 24) of the energy chain (1) arranged at their maximum spacing (m2).

9. Storage unit (21) according to claim 8, **characterized in that** the first chain portion (3) of the energy chain (1) extends over the entire length of the guide tracks (35) in its state maximally retracted into the storage housing (22).

10. Storage unit (21) according to claim 8 or 9, **characterized in that** the storage housing (22) has two parallel side plates (26, 27), which are arranged parallel to the deflection arcs of the deflection regions (10) of the energy chain (1) and extend in the longitudinal direction (l) of the runs (11) over the deflection regions (10) of the energy chain (1) on both winding axes (23, 24), wherein the guide tracks (35), lying opposite one another, of the storage housing (22) are arranged on the inner faces of the side plates (26, 27) .

11. Storage unit (21) according to claim 10, **characterized in that,** adjoining the region of the fixed connection point (25), an opening (37) is provided, at least in one side plate (26, 27) of the storage housing (22), for feeding through the cables emerging from the energy chain (1) near the fixed connection point (25).

12. Storage unit (21) according to claim 10 or 1, **characterized in that,** at the face-side ends of the side plates (26, 27), the storage housing (22) has face plates (28) and upper and lower closing plates (30, 31) connecting these to one another.

13. Storage unit (21) according to claim 12, **characterized in that** the upper and lower closing plate (30, 31) of the storage housing (22) is arranged such that it guides the upper or lower run (11) of the energy chain (1) arranged in the storage housing (22) in a sliding manner.

14. Storage unit (21) according to claim 12 or 13, **characterized in that** one of the face plates (28, 29) has a feed-through opening (32) in the upper or lower region for the run of the energy chain (1) connected to the movable connection point.

15. Storage unit (21) according to one of claims 8-14, **characterized in that** the storage housing (22) is formed of two housing shells (33, 34), the separation face of which lies in a plane which extends parallel to the deflection arcs of the deflection regions (10) of the energy chain (1).

## Revendications

1. Chaîne porte-câbles (1) avec un premier tronçon de chaîne (3) présentant plusieurs maillons de chaîne (2) et un deuxième tronçon de chaîne (5) présentant plusieurs maillons de chaîne (4), les maillons de chaîne (2, 4) des deux tronçons de chaîne (3, 5) sont reliés entre eux de manière pivotante et comprennent chacun deux parties latérales (6, 7) opposées dans une direction transversale (q) à la direction longitudinale (l) de la chaîne porte-câbles (1) qui présentent des surfaces étroites supérieure et inférieure (8) orientées perpendiculairement à la direction transversale (q) et à la direction longitudinale (l), au moins certains des maillons de chaîne (2, 4) comprenant des traverses (9) reliant leurs parties latérales (6, 7) et au moins quelques-uns des maillons (2) de la première section de chaîne (3) présentent des éléments de guidage (12) faisant saillie vers l'extérieur de leurs parties latérales (6, 7) dans la direction transversale (q) pour le guidage des maillons (2) sur ou sur des voies de guidage (35) pouvant être disposées sur le côté extérieur de leurs parties latérales (6, 7), et au moins quelques-uns des maillons (4) du deuxième tronçon de chaîne (5) présentent des éléments de roulement (13) ou des éléments de glissement (14) qui dépassent des surfaces étroites supérieures ou inférieures (8) de leurs parties latérales (6, 7) et qui peuvent rouler ou glisser sur une zone opposée à ces surfaces étroites (8) et en contact avec la chaîne porte-câbles (1), **caractérisé en ce que** la largeur totale (b2) des maillons (4) du deuxième tronçon de chaîne (5) dans la direction transversale (q) est inférieure ou égale à la largeur totale (b1) des maillons (2) du premier tronçon de chaîne (3) moins la largeur dans la direction transversale (q) des éléments de guidage (12) s'étendant à l'extérieur.

2. Chaîne porte-câbles (1), **caractérisée en ce que** les deux tronçons de chaîne s'articulent entre les uns aux autres.

3. Chaîne porte-câbles (1) selon la revendication 1 ou 2, **caractérisée en ce que** les éléments de roulement (13) ou les éléments de glissement (14) du tronçon de chaîne (5) sont alignés en direction longitudinale avec les surfaces étroites (8) des parties latérales (6, 7) des maillons de chaîne (2) du premier tronçon de chaîne (3), de sorte que les éléments de roulement (13) ou les éléments de glissement (14) d'une zone du deuxième tronçon de chaîne (5) roulent ou glissent ou peuvent rouler ou glisser sur les surfaces étroites (8) des parties latérales (6, 7) d'une zone du premier tronçon de chaîne (3).

4. Chaîne porte-câbles (1) selon l'une des revendications 1 à 3, **caractérisée en ce qu'**un maillon de chaîne (15) est disposé entre les deux tronçons de chaîne (3, 5), dont les parties latérales (6, 7) présentent une zone coudée vers l'extérieur (16) et une zone coudée vers l'intérieur (17), la zone coudée vers l'extérieur (16) étant reliée de manière articulée à la partie latérale (6, 7) voisine dans le sens longitudinal (1) du premier tronçon de chaîne (3) et la zone coudée vers l'intérieur (17) étant reliée de manière articulée à la partie latérale (6, 7) voisine dans le sens longitudinal (1) du deuxième tronçon de chaîne (5).

5. Chaîne porte-câbles (1) selon l'une des revendications 1 à 4, **caractérisée en ce que** les parties latérales (6, 7) des maillons (2, 4) du premier tronçon de chaîne (3) et/ou du deuxième tronçon de chaîne (5), qui sont voisines dans la direction longitudinale (1), sont formées alternativement de pattes intérieures et extérieures.

6. Chaîne porte-câbles (1) selon l'une des revendications 1 à 5, **caractérisée en ce que** les éléments de guidage (12) des maillons de chaîne (2) du premier tronçon de chaîne (3) sont réalisés sous forme de rouleaux de guidage (18).

7. Chaîne porte-câbles (1) selon l'une des revendications 1 à 6, **caractérisée en ce que** deux éléments de roulement (13) sont respectivement disposés du côté extérieur sur les maillons extérieurs des maillons de chaîne (4) du deuxième tronçon de chaîne (5).

8. Unité d'accumulation (21) pour une chaîne porte-câbles (1), qui comprend un boîtier d'accumulation (22) et une chaîne de porte-câbles (1) disposée dans celui-ci au moins par sections selon l'une des revendications 1 à 7, dans laquelle la chaîne de porte-câbles (1) ne présentant respectivement qu'un premier tronçon de chaîne (3) et un deuxième tronçon de chaîne (5) s'y raccordant, est enroulée en spirale dans le boîtier d'accumulation (22) avec deux axes angulaires (23, 24) dont la distance est variable et présente à l'une de ses extrémités un point de raccordement fixe (25) disposé de manière stationnaire dans le boîtier d'accumulation (22) à l'intérieur de l'enroulement en spirale et à son autre extrémité un point de raccordement mobile, la distance des axes d'enroulement (23, 24) l'un par rapport à l'autre pouvant être modifiée entre une distance minimale (m1) et une distance maximale (m2) par le déplacement du point de raccordement mobile et le déplacement ainsi provoqué de la chaîne porte-câbles (1), le premier tronçon de chaîne (3) étant relié au point de raccordement mobile et le deuxième tronçon de chaîne (5) au point de raccordement fixe (25), les éléments de roulement (13) ou les éléments de glissement (14) des maillons de chaîne (4) du deuxième tronçon de chaîne (5) faisant saillie sur les surfaces étroites (8) des parties latérales (6, 7) des maillons de chaîne (4), situées radialement à l'extérieur par rapport aux zones de renvoi (10), et pouvant rouler ou glisser sur les côtés, tournés radialement vers l'intérieur, des maillons de chaîne qui sont en contact avec eux, le boîtier d'accumulation (22) présentant des glissières de guidage (35) opposées qui coopèrent avec les éléments de guidage (12) faisant saillie vers l'extérieur sur les maillons de chaîne (2) du premier tronçon de chaîne (3) et qui s'étendent en une ou plusieurs spires en forme de spirale autour de deux axes d'enroulement qui correspondent aux axes d'enroulement (23, 24) de la chaîne porte-câbles (1) disposés à leur distance maximale (m2) .

9. Unité d'accumulation (21) selon la revendication 8, **caractérisée en ce que** le premier tronçon de chaîne (3) de la chaîne porte-câbles (1) s'étend sur toute la longueur des glissières de guidage (35) dans son état rétracté au maximum dans le boîtier d'accumulation (22).

10. Unité d'accumulation (21) selon la revendication 8 ou 9, **caractérisée en ce que** le boîtier d'accumulation (22) présente deux plaques latérales parallèles (26, 27) qui sont disposées parallèlement aux arcs de renvoi des zones de renvoi (10) de la chaîne de porte-câbles (1) et qui s'étendent dans la direction longitudinale (1) des brins (11) sur les zones de renvoi (10) de la chaîne porte-câbles (1) sur les deux axes d'enroulement (, 24), les glissières de guidage (35) opposées du boîtier d'accumulation (22) étant disposées sur les côtés intérieurs des plaques latérales (26, 27).

11. Unité d'accumulation (21) selon la revendication 10, **caractérisée en ce que,** de manière adjacente à la zone du point de raccordement fixe (25), il est prévu, au moins dans une plaque latérale (26, 27) du boîtier d'accumulation (22), une ouverture (37) pour le passage des lignes sortant de la chaîne de porte-câbles (1) au niveau du point de raccordement fixe (25).

12. Unité d'accumulation (21) selon la revendication 10 ou 1, **caractérisée en ce que** le boîtier d'accumulation (22) présente, aux extrémités frontales des plaques latérales (26, 27), des plaques frontales (28) et des plaques de fermeture supérieure et inférieure (30, 31) reliant celles-ci entre elles.

13. Unité d'accumulation (21) selon la revendication 12, **caractérisée en ce que** les plaques de fermeture supérieure et inférieure (30, 31) du boîtier d'accumulation (22) sont disposées de telle sorte qu'elles guident de manière coulissante le brin supérieur ou inférieur (11) de la chaîne porte-câbles (1) disposée dans le boîtier d'accumulation (22).

14. Unité d'accumulation (21) selon la revendication 12 ou 13, **caractérisée en ce que** l'une des plaques frontales (28, 29) présente dans la zone supérieure ou inférieure une ouverture de passage (32) pour le brin de la chaîne porte-câbles (1) relié au point de raccordement mobile.

15. Unité d'accumulation (21) selon l'une des revendications 8 à 14, **caractérisée en ce que** le boîtier d'accumulation (22) est formé de deux coques de boîtier (33, 34) dont la surface de séparation est située dans un plan qui s'étend parallèlement aux arcs de renvoi des zones de renvoi (10) de la chaîne porte-câbles (1).
